# EUROPEAN PATENT APPLICATION

(11) **EP 4 654 008 A1**
(43) Date of publication of application: **26.11.2025**
(21) Application number: 23916993.1
(22) Date of filing: 29.06.2023
(51) Int. Cl.: G06F 9/38

(54) **METHOD AND APPARATUS FOR SCHEDULING BRANCH PREDICTOR FOR MULTIPLE INSTRUCTIONS**

(30) Priority: 16.01.2023 CN 202310063126
(71) Applicant: Beijing Vcore Technology Co.,Ltd., Beijing 100190 (CN)
(72) Inventor: LI, Zusong, Beijing 100190 (CN); HUAN, Dandan, Beijing 100190 (CN)
(74) Representative: Petraz, Gilberto Luigi
(86) International application number: PCT/CN2023/104070
(87) International publication number: WO 2024/152520

(57) **Abstract**

The present disclosure provides a method for scheduling a branch predictor for multiple instructions. The method comprises: determining a branch predictor group; acquiring a set of instructions; acquiring an initial instruction fetch address and an instruction type of each instruction; determining a use sequence of N branch predictors according to the initial instruction fetch address and the instruction type of the instruction; determining a correspondence between M instructions and the N branch predictors according to the use sequence and an instruction arrangement sequence in the set of instructions; and scheduling a corresponding branch predictor according to the instruction arrangement sequence in the set of instructions and the correspondence so as to process an instruction in the set of instructions. By acquiring the initial instruction fetch address and on the basis of the instruction type, a branch predictor corresponding to each instruction is determined, so that rapid allocation of a branch predictor can be achieved, and it can be guaranteed that the probability of selecting each branch predictor is the same, thereby improving the utilization rate of a branch predictor and the instruction processing efficiency.

## Description

### CROSS-REFERENCE TO RELATED APPLICATIONS

This disclosure is based on and claims priority to Chinese patent application NO.202310063126.2, filed on January 16, 2023, the entire contents of which are incorporated herein by reference.

### TECHNICAL FIELD

The disclosure relates to the field of computer technology, and in particular to a method and an apparatus for scheduling a branch predictor for multiple instructions.

### BACKGROUND

The high-performance processors employ pipeline technology, but this introduces the challenge of cycle penalties caused by branch and jump instructions, which becomes more pronounced in processors with deep pipeline structures. Thus, a mature and accurate branch predictor is critical for enhancing processor performance. Current mainstream branch direction predictors, such as Bimode, GShare, and TAGE, are all multi-bit saturation counter-based predictors.

In existing technologies, the branch predictor attempts to parallelly predict a plurality of instructions within a single clock cycle. However, due to inherent patterns in the matching and usage mechanisms of the branch predictor, the branch predictor cannot be fully and effectively utilized. This limitation reduces the efficiency and speed of instruction processing, thus resulting in resource wastage.

### SUMMARY

The disclosure is intended to address, at least in part, one of the technical problems in the related art.

Thus, one object of the disclosure is to provide a method for scheduling a branch predictor for multiple instructions.

A second object of the disclosure is to provide an apparatus for scheduling a branch predictor for multiple instructions.

A third object of the disclosure is to provide an electronic device.

A fourth object of the disclosure is to provide a non-transitory computer readable storage medium.

A fifth object of the disclosure is to provide a computer program product.

In order to achieve the above objects, a first aspect of embodiment of the disclosure provides a method for scheduling a branch predictor for multiple instructions. The method includes: determining a group of branch predictors to be scheduled, in which the group of branch predictors includes N branch predictors, where N is an integer greater than or equal to 1; obtaining an instruction set to be processed, in which the instruction set includes M instructions arranged in an order, where M is an integer greater than or equal to 1; obtaining an initial fetch address and an instruction type of each instruction in the instruction set; determining a using order of the N branch predictors based on the initial fetch address and the instruction type of each instruction in the instruction set; determining a correspondence between the M instructions and the N branch predictors based on the using order and the order of instructions in the instruction set; and scheduling a corresponding branch predictor for the instruction in the instruction set to process the instruction in the instruction set based on the order of instructions in the instruction set and the correspondence.

According to an embodiment of the disclosure, determining the using order of the N branch predictors based on the initial fetch address and the instruction types of the instructions in the instruction set includes: determining a branch predictor to be used by a first instruction in the instruction set from the N branch predictors based on the initial fetch address, and determining the branch predictor to be used by the first instruction as a start branch predictor; for an i-th instruction remained in the instruction set, determining an address interval corresponding to the i-th instruction based on an instruction type of the i-th instruction, where i is an integer greater than 1; and determining a using order of remaining branch predictors in the N branch predictors based on the start branch predictor and the address interval corresponding to the i-th instruction.

According to an embodiment of the disclosure, determining the using order of the remaining branch predictors in the N branch predictors based on the start branch predictor and the address interval corresponding to the i-th instruction includes: obtaining a branch predictor to be used by an (i-1)-th instruction; determining a predictor serial number of the branch predictor to be used by the (i-1)-th instruction; and obtaining a branch predictor to be used by the i-th instruction by adding the predictor serial number of the branch predictor to be used by the (i-1)-th instruction to the address interval corresponding to the i-th instruction.

According to an embodiment of the disclosure, the method further includes: in response to i being 2 and the i-th instruction being a second instruction, obtaining a branch predictor to be used by the second instruction by adding the predictor serial number of the start branch predictor to an address interval corresponding to the second instruction.

According to an embodiment of the disclosure, determining the address interval corresponding to the i-th instruction based on the instruction type of the i-th instruction includes: in response to the instruction type of the i-th instruction being a compressed instruction, determining the address interval corresponding to the i-th instruction as a first value; or in response to the instruction type of the i-th instruction being a non-compressed instruction, determining the address interval corresponding to the i-th instruction as a second value, in which the first value is different from the second value.

According to an embodiment of the disclosure, determining the branch predictor to be used by the first instruction in the instruction set from the N branch predictors based on the initial fetch address includes: determining a target address array to be combined based on a high-order address of the initial fetch address; obtaining a start using serial number by performing an exclusive OR (XOR) processing, an addition processing or a hash processing on the target address array and an offset address of the initial fetch address; and determining a branch predictor in the N branch predictors of which a predictor serial number is consistent with the start using serial number as the branch predictor to be used by the first instruction.

According to an embodiment of the disclosure, determining the target address array to be combined based on the high-order address of the initial fetch address includes: determining a number of bits of the offset address; and obtaining the target address array by continuously truncating the high-order address based on the number of bits of the offset address; or obtaining the target address array by folding the high-order address until a number of bits of the folded high-order address is equal to the number of bits of the offset address.

According to an embodiment of the disclosure, obtaining the target address array by folding the high-order address until the number of bits of the folded high-order address is equal to the number of bits of the offset address includes: selecting a plurality of candidate address arrays with the same number of bits as the offset address from the high-order address; and obtaining the target address array by performing the XOR processing, the addition processing or the hash processing on two or more candidate address arrays in the plurality of candidate address arrays.

According to an embodiment of the disclosure, the method further includes: obtaining an address of each instruction in the instruction set and extracting a common portion of the address of each instruction as a high-order address; and obtaining a high-order address and a low-order address remained in an address of the first instruction in the instruction set, and determining an offset address from the low-order address.

In order to achieve the above objects, a second aspect of embodiment of the disclosure provides an apparatus for scheduling a branch predictor for multiple instructions. The apparatus includes: a first determining module, configured to determine a group of branch predictors to be scheduled, in which the group of branch predictors includes N branch predictors, where N is an integer greater than or equal to 1; a first obtaining module, configured to obtain an instruction set to be processed, in which the instruction set includes M instructions arranged in an order, where M is an integer greater than or equal to 1; a second obtaining module, configured to obtain an initial fetch address and an instruction type of each instruction in the instruction set; a second determining module, configured to determine a using order of the N branch predictors based on the initial fetch address and the instruction type of each instruction in the instruction set; a third determining module, configured to determine a correspondence between the M instructions and the N branch predictors based on the using order and the order of instructions in the instruction set; and a processing module, configured to schedule a corresponding branch predictor for the instruction in the instruction set to process the instruction in the instruction set based on the order of instructions in the instruction set and the correspondence.

According to an embodiment of the disclosure, the second determining module is further configured to: determine a branch predictor to be used by a first instruction in the instruction set from the N branch predictors based on the initial fetch address, and determining the branch predictor to be used by the first instruction as a start branch predictor; for an i-th instruction remained in the instruction set, determine an address interval corresponding to the i-th instruction based on an instruction type of the i-th instruction, where i is an integer greater than 1; and determine a using order of remaining branch predictors in the N branch predictors based on the start branch predictor and the address interval corresponding to the i-th instruction.

According to an embodiment of the disclosure, the second determining module is further configured to: obtain a branch predictor to be used by an (i-1)-th instruction; determine a predictor serial number of the branch predictor to be used by the (i-1)-th instruction; and obtain a branch predictor to be used by the i-th instruction by adding the predictor serial number of the branch predictor to be used by the (i-1)-th instruction to the address interval corresponding to the i-th instruction.

According to an embodiment of the disclosure, the second determining module is further configured to: in response to i being 2 and the i-th instruction being a second instruction, obtain a branch predictor to be used by the second instruction by adding the predictor serial number of the start branch predictor to an address interval corresponding to the second instruction.

According to an embodiment of the disclosure, the second determining module is further configured to: in response to the instruction type of the i-th instruction being a compressed instruction, determine the address interval corresponding to the i-th instruction as a first value; or in response to the instruction type of the i-th instruction being a non-compressed instruction, determine the address interval corresponding to the i-th instruction as a second value, in which the first value is different from the second value.

According to an embodiment of the disclosure, the second determining module is further configured to: determine a target address array to be combined based on a high-order address of the initial fetch address; obtain a start using serial number by performing an exclusive OR (XOR) processing, an addition processing or a hash processing on the target address array and an offset address of the initial fetch address; and determine a branch predictor in the N branch predictors of which a predictor serial number is consistent with the start using serial number as the branch predictor to be used by the first instruction.

According to an embodiment of the disclosure, the second determining module is further configured to: determine a number of bits of the offset address; and obtain the target address array by continuously truncating the high-order address based on the number of bits of the offset address; or obtain the target address array by folding the high-order address until a number of bits of the folded high-order address is equal to the number of bits of the offset address.

According to an embodiment of the disclosure, the second determining module is further configured to: select a plurality of candidate address arrays with the same number of bits as the offset address from the high-order address; and obtain the target address array by performing the XOR processing, the addition processing or the hash processing on two or more candidate address arrays in the plurality of candidate address arrays.

According to an embodiment of the disclosure, the second determining module is further configured to: obtain an address of each instruction in the instruction set and extracting a common portion of the address of each instruction as a high-order address; and obtain a high-order address and a low-order address remained in an address of the first instruction in the instruction set, and determining an offset address from the low-order address.

In order to achieve the above objects, a third aspect of embodiment of the disclosure provides an electronic device. The electronic device includes: a processor and a memory; in which the processor is configured to read executable program codes stored in the memory to run a program corresponding to the executable program codes, to realize the method for scheduling a branch predictor for multiple instructions in first aspect of embodiment of the disclosure.

In order to achieve the above objects, a fourth aspect of embodiment of the disclosure provides a non-transitory computer-readable storage medium storing computer instructions. The computer instructions are configured to realize the method for scheduling a branch predictor for multiple instructions in first aspect of embodiment of the disclosure.

In order to achieve the above objects, a fifth aspect of embodiment of the disclosure provides a computer program product. The computer program product includes a computer program that, when executed by a processor, realizes the method for scheduling a branch predictor for multiple instructions in first aspect of embodiment of the disclosure.

By obtaining the initial fetch address, the branch predictor corresponding to each instruction is determined based on the instruction type in the instruction set. This may realize the fast allocation of branch predictors, and also ensure equal selection probability for each branch predictor, improving the utilization rate of the branch predictor and the efficiency of instruction processing.

### BRIEF DESCRIPTION OF THE DRAWINGS

FIG. 1 is a flow chart illustrating a method for scheduling a branch predictor for multiple instructions of an embodiment of the disclosure.
FIG. 2 is a schematic diagram illustrating a structure of a TAGE branch predictor of an embodiment of the disclosure.
FIG. 3 is a flow chart illustrating another method for scheduling a branch predictor for multiple instructions of an embodiment of the disclosure.
FIG. 4 is a schematic diagram illustrating a structure of a TAGE branch predictor group including a plurality of TAGE branch predictors.
FIG. 5 is a flow chart illustrating another method for scheduling a branch predictor for multiple instructions of an embodiment of the disclosure.
FIG. 6 is a schematic diagram illustrating the structure of a branch predictor of an embodiment of the disclosure.
FIG. 7 is a schematic diagram illustrating a structure of a branch predictor group including a plurality of branch predictors.
FIG. 8 is a flow chart illustrating another method for scheduling a branch predictor for multiple instructions of an embodiment of the disclosure.
FIG. 9 is a block diagram illustrating an apparatus for scheduling a branch predictor for multiple instructions of an embodiment of the disclosure.
FIG. 10 is a block diagram illustrating an electronic device of an embodiment of the disclosure.

### DETAILED DESCRIPTION

Description will be made in detail below to embodiments of the disclosure. Examples of embodiments are illustrated in the accompanying drawings, in which, the same or similar numbers represent the same or similar elements or elements with the same or similar functions. Embodiments described below with reference to the accompanying drawings are exemplary, which are intended to explain the disclosure and do not be understood a limitation of the disclosure.

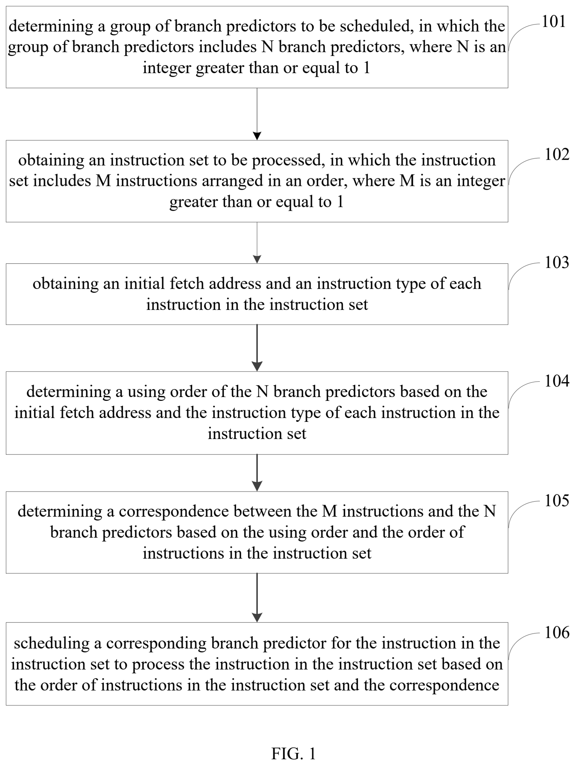

FIG. 1 is a flow chart illustrating a method for scheduling a branch predictor for multiple instructions of an embodiment of the disclosure. As shown in FIG. 1, the method for scheduling a branch predictor for multiple instructions includes blocks S101 to S106.

At block S101, a group of branch predictors to be scheduled is determined, in which the group of branch predictors includes N branch predictors, where N is an integer greater than or equal to 1.

It should be noted that the branch predictor in embodiments of the disclosure refers to a branch prediction component supporting compressed instructions. The branch predictor may be Bimode, GShare, TAGE, etc., which is not limited herein.

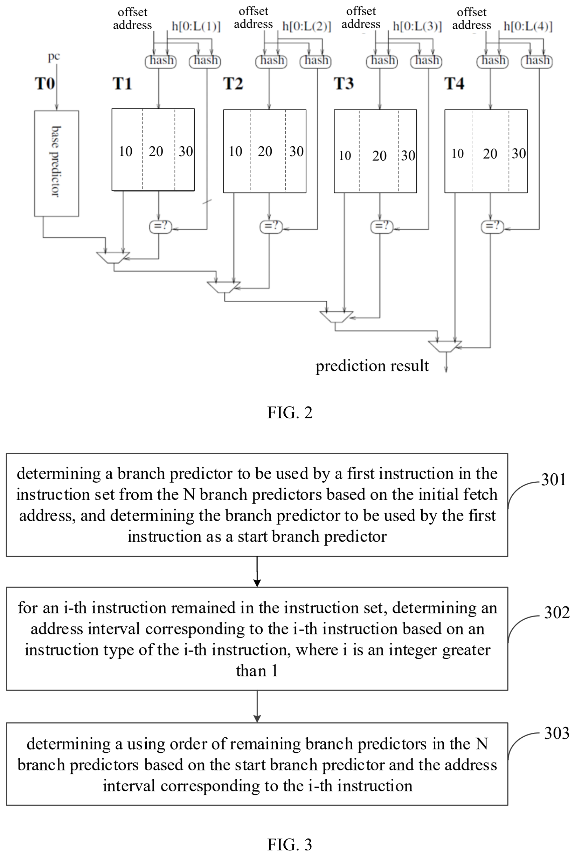

Taking the branch predictor is the TAGE as an example, as shown in FIG. 2, FIG. 2 is a schematic diagram illustrating a structure of a TAGE branch predictor of an embodiment of the disclosure. The TAGE branch predictor includes five prediction tables and one history register, denoted as T0, T1, T2, T3, T4, and h respectively. The T0 (base predictor) is directly indexed using the program counter (PC) and serves as the basic default prediction table. The T1, T2, T3, and T4 are tagged prediction tables, each including three fields: "pred" (a saturation counter field, configured to identify the prediction direction via the highest valid bit, shown as 10 in the figure), "tag" (a partial address field, shown as 20 in the figure), and "U" (a validity field, configured to manage table replacement strategies, shown as 30 in the figure). During the prediction, the T1, T2, T3, T4, and T0 are accessed simultaneously, with T0 providing the default prediction.

The TAGE predictor occupies significant storage space, where different tables have varying tag lengths, and longer history lengths correspond to wider tag bit widths. For a TAGE predictor with 5 components, a tag length of T1 and T2 is 8 bits, and a tag length of T3 and T4 is 9 bits. With 1K items per table, the total storage is 54K bits. For a TAGE predictor with 8 components, a tag length of T1 and T2 is 8 bits, a tag length of T3 and T4 is 10 bits, a tag length of T5 and T6 is 11 bits, and a tag length of T7 is 12 bits. With 512 items per table, the total storage is 53.5K bits. To enable parallel prediction for 16 instructions, 16 times storage capacity is required. In the TAGE predictor, when the prediction of a tagged table hits, the prediction result with the longest history length is determined as the final prediction result; when the prediction of the tagged table does not hit, the default predictor is used.

At block S102, an instruction set to be processed is obtained, in which the instruction set includes M instructions arranged in an order, where M is an integer greater than or equal to 1.

It should be noted that the instruction set in embodiments of the disclosure refers to a set of instructions to be executed. After obtaining the instruction set, the instructions may be ordered based on the fetch addresses of the instruction to be executed.

In the embodiments of the disclosure, the order of instructions in the instruction set may be determined through various methods, which is not limited herein. Specifically, it may be configured according to actual design requirements.

Alternatively, the order may be determined based on the fetch addresses of the instructions in the instruction set. For example, a using order may be from small to large, or from large to small based on the fetch addresses.

Alternatively, all instructions may also be executed simultaneously.

Alternatively, the instructions may be executed based on a preset order, which may be manually defined or determined based on a specific rule. For example, the order may be determined based on an instruction type.

At block S103, an initial fetch address and an instruction type of each instruction in the instruction set are obtained.

The fetch address is the address of the memory unit where an instruction resides. In the embodiments of the disclosure, the initial fetch address may be selected as the smallest or largest fetch address.

In an embodiment of the disclosure, the instruction types include a compressed instruction and a non-compressed instruction. To shorten code length and improve instruction cache utilization, instruction designs may include compressed the instruction (also called short instruction). For example, ARM (Advanced reduced instruction set computing (RISC) Machines) designed an ARM Thumb instruction set and a Thumb 2; MIPS (Microprocessor without interlocked pipeline stages) designed an MIPS16 instruction set and a microMIPS instruction set successively. Additionally, RISC-V (Reduced Instruction Set Computer-Five) designed a RV32C compressed instruction set of 16 bits.

Taking the RISC-V instruction set as an example, if a fetch width is set to 32 bytes, a maximum of eight instructions may be fetched per cycle using a standard RVI instruction. Since the RISC-V instruction set supports the compressed instruction, if a processor core implements the RISC-V compressed instruction extension, the instruction size may be two bytes (16 bits) or four bytes (32 bits), so that up to sixteen instructions may be fetched per cycle (if all are compressed instructions). Under such the fetch width, the probability of encountering one or a plurality of transfer instructions per fetch is high, necessitating parallel prediction of a plurality of instructions to avoid performance penalties from structural dependencies. Thus, the branch prediction component adopts a fully parallel prediction design, performing predictions for all 16 possible instruction starting positions within the 32 bytes fetched at once. A branch prediction component supporting compressed instructions performs the parallel prediction on the entire fetch width, with the branch prediction of each instruction corresponding to a complete set of lookup tables. This parallel support for compressed instruction branch prediction exponentially increases the items of the branch predictor, which already consumes significant storage resources. Since the items are indexed based on the instruction address, half of the table space may be wasted in the absence of the compressed instruction.

At block S104, a using order of the N branch predictors is determined based on the initial fetch address and the instruction type of each instruction in the instruction set.

To address the storage waste issue, after obtaining the initial fetch address, a serial number of the branch predictor corresponding to the first instruction may be determined based on the initial fetch address, and then a using order of the N branch predictors is determined based on instruction types of other instructions in the instruction set.

It should be noted that the method for determining the using order of the N branch predictors may vary. For example, the using order may be from small to large, or from large to small based on the serial number of the branch predictor, which is not limited herein and may be configured based on actual design requirements.

Alternatively, a jump width of the branch predictor may also be determined based on the instruction type. For example, if the current instruction corresponds to a serial number X of the branch predictor, when the instruction type is the compressed instruction, the jump width is A, and when the instruction type is the non-compressed instruction, the jump width is B. That is, if the next instruction is the compressed instruction, the serial number of the branch predictor is X + A; if the next instruction is a non-compressed instruction, the serial number of the branch predictor is X + B.

It should be noted that if the serial number of the branch predictor predicted by the instruction is greater than the number of branch predictors N, the actual branch predictor may be determined by computing the difference between the current serial number and N, and the difference is determined as the current serial number of the branch predictor. For example, if the serial number of the branch predictor predicted by the instruction is Q and Q > N, then Q - N is determined as the current predictor serial number.

At block S105, a correspondence between the M instructions and the N branch predictors is determined based on the using order and the order of instructions in the instruction set.

In an embodiment of the disclosure, after determining the using order of the N branch predictors, the branch predictor corresponding to the initial fetch address may be first determined, and the branch predictors may be determined in the using order based on the order of instructions in the instruction set.

At block S106, a corresponding branch predictor is scheduled for the instruction in the instruction set to process the instruction in the instruction set based on the order of instructions in the instruction set and the correspondence.

In an embodiment of the disclosure, the group of branch predictors to be scheduled is first determined, in which the group of branch predictors includes N branch predictors, where N is an integer greater than or equal to 1. The instruction set to be processed is obtained, in which the instruction set includes M instructions arranged in an order, where M is an integer greater than or equal to 1. The initial fetch address and the instruction type of each instruction in the instruction set are obtained. The using order of the N branch predictors is determined based on the initial fetch address and the instruction type of each instruction in the instruction set. The correspondence between the M instructions and the N branch predictors is determined based on the using order and the order of instructions in the instruction set. Finally, the corresponding branch predictor is scheduled for the instruction in the instruction set to process the instruction in the instruction set based on the order of instructions in the instruction set and the correspondence. Thus, by obtaining the initial fetch address, the branch predictor corresponding to each instruction is determined based on the instruction type in the instruction set. This may realize the fast allocation of branch predictors, and also ensure equal selection probability for each branch predictor, improving the utilization rate of the branch predictor and the efficiency of instruction processing.

In the above embodiments, determining the using order of the N branch predictors based on the initial fetch address and the instruction type of each instruction in the instruction set may be further explained in FIG. 3. The method includes blocks S301 to S303.

At block S301, a branch predictor to be used by a first instruction in the instruction set from the N branch predictors is determined based on the initial fetch address, and the branch predictor to be used by the first instruction is determined as a start branch predictor.

It should be noted that the initial fetch address is the fetch address of the first instruction in the instruction set. The first instruction may be the instruction with the smallest fetch address or the largest fetch address in the instruction set to be executed, which is not limited herein.

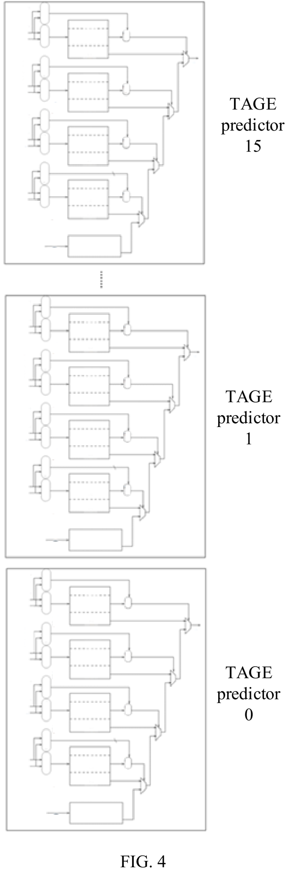

In the related art, the offset address is used as a using serial number of a starting branch predictor corresponding to the first instruction, and the branch predictor indices for other instructions are derived based on the starting branch predictor. As shown in FIG. 4, FIG. 4 is a schematic diagram illustrating a structure of a TAGE branch predictor group including a plurality of TAGE branch predictors. Taking a TAGE branch predictor group including 16 TAGE branch predictors as an example (the specific structure of the TAGE branch predictor may refer to FIG. 2), all 16 TAGE branch predictors are fully utilized when all instructions are compressed instructions. In the case that there are no compressed instructions, the PC of the non-compressed instruction are 32 bits (4 bytes) aligned. Since the lowest two bits of the fetch address (PC [1:0]) of the first instruction are always 00, the offset address is necessarily even. For example, if PC = 00000448a0 (binary: 0000 0000 0000 0000 0000 0100 0100 1000 1010 0000), a starting address (PC [4:1] =0000) of the offset address is even, such as 0, 2, 4, etc. For the non-compressed instruction, the address interval between a subsequent instruction is also even, causing odd-numbered branch predictors to remain unused, while even-numbered predictors are overused, leading to table item replacements and reduced branch prediction accuracy.

In an embodiment of the disclosure, after obtaining the initial fetch address, the high-order address and the offset address may be determined based on the initial fetch address, and the branch predictor to be used for the first instruction in the instruction set is determined based on the high-order address and offset address.

It should be noted that the high-order address is the portion of the addresses of the first instruction address that is identical to the addresses of other instructions in an instruction counter, and the offset address is the remaining part of the address of the first instruction minus the last bit of the address. For example, if the fetch address of the first instruction is PC = ffffffffc839c5fc8 (binary: 1111 1111 1111 1111 1111 1111 1111 1111 1000 0011 1001 1100 0101 1111 1100 1000), and the identical part to the other instructions to be executed is pc =PC [63:5], the high-order address is 1111 1111 1111 1111 1111 1111 1111 1111 1000 0011 1001 1100 0101 1111 110, and the offset address is PC [4:1] = 0100.

After determining the high-order address and offset address, data processing may be performed based on the high-order address and offset address, and the branch predictor to be used for the first instruction in the instruction set is determined based on a preset rule.

In an embodiment of the disclosure, there may be a plurality of preset rules. For example, the branch predictor to be used for the first instruction in the instruction set may be determined by performing a replacement processing, a hash processing, or an addition processing on the offset address based on one or more bits of the high-order address.

At block S302, for an i-th instruction remained in the instruction set, an address interval corresponding to the i-th instruction is determined based on an instruction type of the i-th instruction, where i is an integer greater than 1.

In an embodiment of the disclosure, the instruction types include a compressed instruction and a non-compressed instruction. To shorten code length and improve instruction cache utilization, instruction designs may include compressed the instruction (also called short instruction). It should be noted that there may be a plurality of compressed instruction types, which are not limited herein. Specifically, it may be configured according to actual situation. For example, ARM designed an ARM Thumb instruction set and a Thumb 2; MIPS designed an MIPS16 instruction set and a microMIPS instruction set successively; and RISC-V designed a RV32C compressed instruction set of 16 bits.

In an embodiment of the disclosure, in response to the instruction type of the i-th instruction being a compressed instruction, the address interval corresponding to the i-th instruction is determined as a first value; or in response to the instruction type of the i-th instruction being a non-compressed instruction, the address interval corresponding to the i-th instruction is determined as a second value, in which the first value is different from the second value. For example, the first value may be 1, and the second value may be 2.

At block S303, a using order of remaining branch predictors in the N branch predictors is determined based on the start branch predictor and the address interval corresponding to the i-th instruction.

After obtaining the starting branch predictor, the serial number of the branch predictor to be jumped may be determined based on the compression type of other instructions, thus determining the using order of the remaining branch predictors in the N branch predictors. For example, if an initial instruction fetch address is PC = 00000448a0 (binary: 0000 0000 0000 0000 0000 0100 0100 1000 1010 0000), the start using serial number is generated by the offset address (PC [4:1]) performing an exclusive OR (XOR) with the lower bits of a high-order address (PC [8:5]), i.e., New_Offset = offset XOR PC [8:5] = 0000 XOR 0101 = 0101 (decimal 5). This scatters the start using serial number of the branch predictor from 0 to 5, i.e., the using serial number of the branch predictor is: New_Offset, New_Offset + address interval of the next valid instruction, New_Offset + address interval of the next two valid instructions, and so on. If all 16 instructions are valid compressed instructions, the using serial number of the branch predictor of each instruction sequentially becomes 5, 6, 7, ..., 15, 0, 1, 2, 3, 4. If all 8 instructions are valid non-compressed instructions, the using serial number of the branch predictor of each instruction sequentially becomes 5, 7, 9, 11, 13, 15, 1, 3.

In an embodiment of the disclosure, the branch predictor to be used by the first instruction in the instruction set from the N branch predictors is determined based on the initial fetch address, and the branch predictor to be used by the first instruction is determined as a start branch predictor. For the i-th instruction remained in the instruction set, the address interval corresponding to the i-th instruction is determined based on the instruction type of the i-th instruction, where i is an integer greater than 1. The using order of remaining branch predictors in the N branch predictors is determined based on the start branch predictor and the address interval corresponding to the i-th instruction. By determining the starting branch predictor corresponding to the first instruction via the high-order address and the offset address of the first instruction, and then determining the branch predictor corresponding to the other instructions in the instruction counter based on the starting branch predictor, it may ensure that equal selection probability for each branch predictor, improving the utilization rate of the branch predictor and the efficiency of instruction processing.

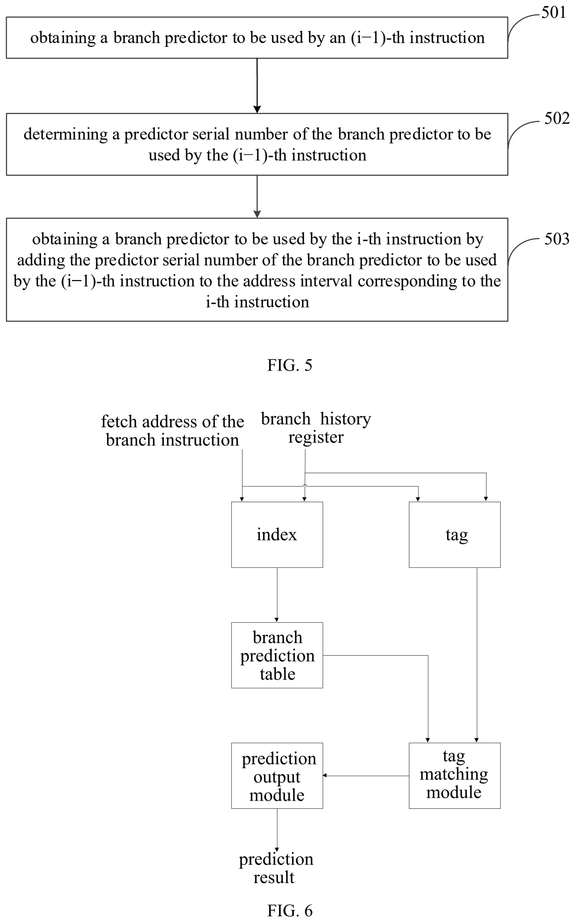

In the above embodiments, determining the using order of remaining branch predictors in the N branch predictors based on the start branch predictor and the address interval corresponding to the i-th instruction may be further explained in FIG. 5. The method includes blocks S501 to S503.

At block S501, a branch predictor to be used by an (i-1)-th instruction is obtained.

At block S502, a predictor serial number of the branch predictor to be used by the (i-1)-th instruction is determined.

It should be noted that different branch predictors correspond to different predictor serial numbers of the branch predictors. In this case, accurate assignment of the instruction via the predictor serial number of the branch predictor may be realized.

At block S503, a branch predictor to be used by the i-th instruction is obtained by adding the predictor serial number of the branch predictor to be used by the (i-1)-th instruction to the address interval corresponding to the i-th instruction.

In an embodiment of the disclosure, after determining the predictor serial number of the branch predictor to be used by the (i-1)-th instruction, the predictor serial number of the branch predictor to be used by the (i-1)-th instruction is added to the address interval corresponding to the i-th instruction.

When the instruction type of the i-th instruction is a compressed instruction, the predictor serial number of the starting branch predictor is added to a first value. When the instruction type of the i-th instruction is a non-compressed instruction, the predictor serial number of the starting branch predictor is added to a second value. Thus, the predictor serial number of the branch predictor to be used by the i-th instruction is determined.

It should be noted that when i is 2, the i-th instruction is a second instruction, and the predictor serial number of the starting branch predictor is added to an address interval corresponding to the second instruction to obtain the predictor serial number of the branch predictor to be used by the second instruction.

When determining a branch predictor for the subsequent instruction, a branch predictor corresponding to each instruction may be accurately determined by an iterative approach based on the instruction address interval.

For example, if the starting predictor serial number is determined as New_Offset = 0100, the predictor serial number of the starting branch predictor is 4. If the second instruction is a compressed instruction, the third instruction is a non-compressed instruction, and the fourth instruction is a compressed instruction, the predictor serial numbers of the starting branch predictor of each instruction are 4, 5, 7, 8, respectively.

In an embodiment of the disclosure, the branch predictor to be used by the (i-1)-th instruction is obtained. The predictor serial number of the branch predictor to be used by the (i-1)-th instruction is determined. The branch predictor to be used by the i-th instruction is obtained by adding the predictor serial number of the branch predictor to be used by the (i-1)-th instruction to the address interval corresponding to the i-th instruction. By determining the address interval corresponding to an instruction based on the instruction type, and after determining the starting branch predictor, an iterative method may be used to determine the starting branch predictor corresponding to all subsequent instructions in the instruction set, without processing the offset address of each instruction. The branch predictor of the current instruction may be determined only based on the branch predictor of the previous instruction, thus improving processing efficiency and reducing computational costs.

It should be noted that other branch predictors based on the prediction table, such as Bimode and GShare, are similar to the TAGE branch predictor, using the branch prediction table to record prediction information. As shown in FIG. 6, FIG. 6 is a schematic diagram illustrating the structure of a branch predictor of an embodiment of the disclosure. The branch predictor includes a plurality of branch prediction tables, each item of which stores a tag. Using the fetch address PC of the branch instruction and data from the branch history register, when a table with a tag hits, the prediction result with the longest history length is determined as the final prediction result.

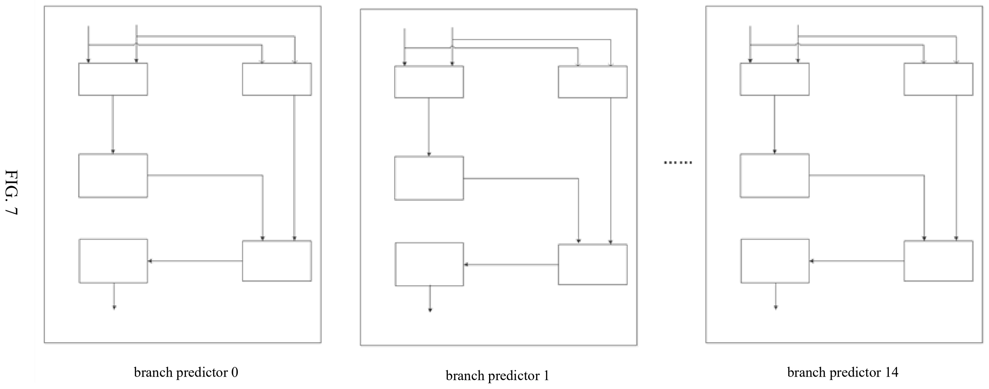

FIG. 7 is a schematic diagram illustrating a structure of a branch predictor group including a plurality of branch predictors. As shown in FIG. 7, the branch predictor group includes 16 branch predictors, and the structure of each branch predictor may refer to FIG. 6. If the branch predictor supporting a compressed instruction set requires parallel prediction of a plurality of instructions, a plurality of predictors are needed. The starting addresses of the predictors may be determined using the methods described in the above embodiments. For example, the above may be implemented by the offset address XOR a specific bit in the high-order address PC, or by performing a folding transformation on the high-order address and performing an XOR computation with the offset address.

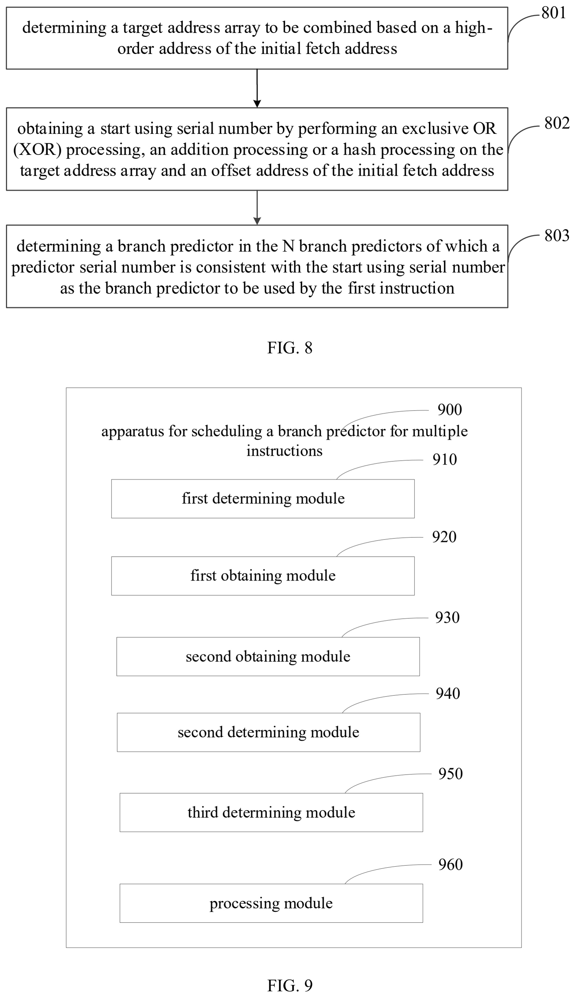

In the above embodiment, determining the branch predictor to be used by the first instruction in the instruction set from the N branch predictors based on the initial fetch address as further explained in FIG. 8. The method includes blocks S801 to S803.

At block S801, a target address array to be combined is determined based on a high-order address of the initial fetch address.

It should be noted that the target address array to be combined has a same number of bits as the offset address. The method for determining the target address array may vary and is not limited herein.

Alternatively, the number of bits of the offset address may first be determined, and the high-order address may be processed to obtain an array with the same number of bits as the offset address, serving as the target address array. The truncation position may be predefined or random, which is not limited herein. For example, an initial instruction fetch address is PC = 00000448a0 (binary: 0000 0000 0000 0000 0000 0100 0100 1000 1010 0000), the XOR operation is performed on the offset address (PC[4:1]) and any bits (e.g., PC[14:11] of the high-order address PC, that is, New_Offset = offset XOR PC[4:1] XOR PC[14:11]), then New_Offset = 0000 XOR 1001 = 1001, and the start using serial number of the branch predictor is 9. If all instructions are non-compressed instructions, the serial numbers of the branch predictor are 9, 11, 13, 15, 1, 3, 5, 7 sequentially.

Alternatively, the target address array is obtained by continuously truncating the high-order address based on the number of bits of the offset address.

Alternatively, the target address array is obtained by folding the high-order address until a number of bits of the folded high-order address is equal to the number of bits of the offset address.

A plurality of candidate address arrays with the same number of bits as the offset address are determined from the high-order address, and the target address array is obtained by performing the XOR processing, the addition processing or the hash processing on two or more candidate address arrays in the plurality of candidate address arrays. For example, for an initial instruction fetch address PC = 00000448a0 (binary: 0000 0000 0000 0000 0000 0100 0100 1000 1010 0000), the high-order address PC [16:5] = 0010 0100 0101 is folded by dividing the high-order address into three groups of 4 bits each. Two groups of numbers may be performed the addition processing or the XOR processing, and then be performed the addition processing or the XOR processing with the offset. Alternatively, the target address array may be obtained by performing the addition processing or the XOR processing on the three groups of numbers.

At block S802, a start using serial number is obtained by performing an XOR processing, an addition processing or a hash processing on the target address array and an offset address of the initial fetch address.

Taking the XOR processing as an example, if the initial fetch address is 1111 1111 1111 1111 1111 1111 1111 1111 1000 0011 1001 1100 0101 1111 1100 1000, the corresponding high address is 1111 1111 1111 1111 1111 1111 1111 1111 1000 0011 1001 1100 0101 1111 110 and the offset address is 0100. The address code of PC [9:6] is truncated to 1111 as the target address array, and the starting using serial number may be determined by various operations based on the target address array 1111 and the offset address 0100. For example, the XOR processing may be performed on the target address array 1111 and the offset address 0100, and the corresponding initial address identifier is 1011.

At block S803, a branch predictor in the N branch predictors of which a predictor serial number is consistent with the start using serial number is determined as the branch predictor to be used by the first instruction.

After determining the start using serial number, the branch predictor in the N branch predictors of which a predictor serial number is the start using serial number is determined as the branch predictor to be used by the first instruction. For example, if the start using serial number is 1011, the branch predictor in the branch predictors of which the predictor serial number is 11 may be determined as the branch predictor to be used by the first instruction.

In an embodiment of the disclosure, the target address array to be combined is determined based on the high-order address of the initial fetch address. The start using serial number is obtained by performing the XOR processing, the addition processing or the hash processing on the target address array and the offset address of the initial fetch address. The branch predictor in the N branch predictors of which the predictor serial number is consistent with the start using serial number is determined as the branch predictor to be used by the first instruction. Thus, by processing the high-order address and the offset address, the start using serial number is determined, compared to the method for determining the initial address identifier in the prior art, this method may prevent the initial address identifier from always being an even number, and thus improving the utilization rate of the branch predictor.

Corresponding to the method for scheduling a branch predictor for multiple instructions provided in the above embodiments, an embodiment of the disclosure further provides an apparatus for scheduling a branch predictor for multiple instructions. Since the apparatus for scheduling a branch predictor for multiple instructions provided in an embodiment of the disclosure corresponds to the method for scheduling a branch predictor for multiple instructions provided in the above embodiments, the implementation of the method for scheduling a branch predictor for multiple instructions described above is also applicable to the apparatus for scheduling a branch predictor for multiple instructions provided in an embodiment of the disclosure, and will not be described in detail in the following embodiments.

FIG. 9 is a block diagram illustrating an apparatus for scheduling a branch predictor for multiple instructions of an embodiment of the disclosure. As shown in FIG. 9, the apparatus 900 for scheduling a branch predictor for multiple instructions includes: a first determining module 910, a first obtaining module 920, a second determining module 930, a third determining module 940, a third determining module 950 and a processing module 960.

The first determining module 910 is configured to determine a group of branch predictors to be scheduled, in which the group of branch predictors includes N branch predictors, where N is an integer greater than or equal to 1.

The first obtaining module 920 is configured to obtain an instruction set to be processed, in which the instruction set includes M instructions arranged in an order, where M is an integer greater than or equal to 1.

The second obtaining module 930 is configured to obtain an initial fetch address and an instruction type of each instruction in the instruction set;

The second determining module 940 is configured to determine a using order of the N branch predictors based on the initial fetch address and the instruction type of each instruction in the instruction set.

The third determining module 950 is configured to determine a correspondence between the M instructions and the N branch predictors based on the using order and the order of instructions in the instruction set; and

The processing module 960 is configured to schedule a corresponding branch predictor for the instruction in the instruction set to process the instruction in the instruction set based on the order of instructions in the instruction set and the correspondence.

In an embodiment of the disclosure, the second determining module 940 is further configured to determine a branch predictor to be used by a first instruction in the instruction set from the N branch predictors based on the initial fetch address, and determining the branch predictor to be used by the first instruction as a start branch predictor; for an i-th instruction remained in the instruction set, determine an address interval corresponding to the i-th instruction based on an instruction type of the i-th instruction, where i is an integer greater than 1; and determine a using order of remaining branch predictors in the N branch predictors based on the start branch predictor and the address interval corresponding to the i-th instruction.

In an embodiment of the disclosure, the second determining module 940 is further configured to obtain a branch predictor to be used by an (i-1)-th instruction; determine a predictor serial number of the branch predictor to be used by the (i-1)-th instruction; and obtain a branch predictor to be used by the i-th instruction by adding the predictor serial number of the branch predictor to be used by the (i-1)-th instruction to the address interval corresponding to the i-th instruction.

In an embodiment of the disclosure, the second determining module 940 is further configured to, in response to i being 2 and the i-th instruction being a second instruction, obtain a branch predictor to be used by the second instruction by adding the predictor serial number of the start branch predictor to an address interval corresponding to the second instruction.

In an embodiment of the disclosure, the second determining module 940 is further configured to, in response to the instruction type of the i-th instruction being a compressed instruction, determine the address interval corresponding to the i-th instruction as a first value; or in response to the instruction type of the i-th instruction being a non-compressed instruction, determine the address interval corresponding to the i-th instruction as a second value, in which the first value is different from the second value.

In an embodiment of the disclosure, the second determining module 940 is further configured to determine a target address array to be combined based on a high-order address of the initial fetch address; obtain a start using serial number by performing an exclusive OR (XOR) processing, an addition processing or a hash processing on the target address array and an offset address of the initial fetch address; and determine a branch predictor in the N branch predictors of which a predictor serial number is consistent with the start using serial number as the branch predictor to be used by the first instruction.

In an embodiment of the disclosure, the second determining module 940 is further configured to determine a number of bits of the offset address; and obtain the target address array by continuously truncating the high-order address based on the number of bits of the offset address; or obtain the target address array by folding the high-order address until a number of bits of the folded high-order address is equal to the number of bits of the offset address.

In an embodiment of the disclosure, the second determining module 940 is further configured to select a plurality of candidate address arrays with the same number of bits as the offset address from the high-order address; and obtain the target address array by performing the XOR processing, the addition processing or the hash processing on two or more candidate address arrays in the plurality of candidate address arrays.

In an embodiment of the disclosure, the second determining module 940 is further configured to obtain an address of each instruction in the instruction set and extracting a common portion of the address of each instruction as a high-order address; and obtain a high-order address and a low-order address remained in an address of the first instruction in the instruction set, and determining an offset address from the low-order address.

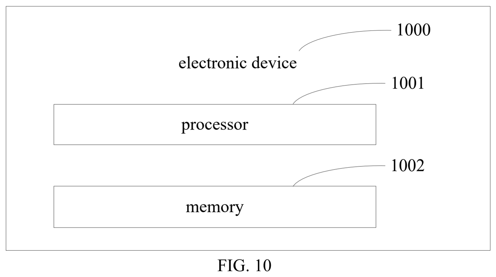

To implement the above embodiments, embodiments of the disclosure further provide an electronic device 1000. FIG. 10 is a block diagram illustrating an electronic device of an embodiment of the disclosure. As shown in FIG. 10, the electronic device 1000 includes a processor 1001 and a memory 1002 communicatively coupled to the at least one processor. The memory 1002 stores instructions executable by the at least one processor, and the instructions are executed by the at least one processor 1001 to implement the method for scheduling a branch predictor for multiple instructions as shown in FIG. 1 to FIG. 8.

To implement the above embodiments, embodiments of the disclosure further provide a non-transitory computer-readable storage medium. The non-transitory computer-readable storage medium stores computer instructions. The computer instructions are configured to cause the computer to implement the method for scheduling a branch predictor for multiple instructions as shown in FIG. 1 to FIG. 8.

To implement the above embodiments, embodiments of the disclosure further provide a computer program product. The computer program product includes a computer program that, when executed by a processor, implements the method for scheduling a branch predictor for multiple instructions as shown in FIG. 1 to FIG. 8.

In the description of the disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise", "anti-clockwise", "axial", "radial" and "circumference" refer to the directions and location relations which are the directions and location relations shown in the drawings, and for describing the disclosure and for describing in simple, and which are not intended to indicate or imply that the device or the elements are disposed to locate at the specific directions or are structured and performed in the specific directions, which could not to be understood to the limitation of the disclosure.

In addition, terms such as "first" and "second" are used herein for purposes of description and are not intended to indicate or imply relative importance or significance. Furthermore, the feature defined with "first" and "second" may include one or more this feature distinctly or implicitly. In the description of the disclosure, "a plurality of" means two or more than two, unless specified otherwise.

In the description of the disclosure, reference throughout this specification to "an embodiment," "some embodiments," "an example," "a specific example," or "some examples," means that a particular feature, structure, material or feature described in connection with the embodiment or example is included in at least one embodiment or example of the disclosure. The appearances of the above phrases throughout this specification are not necessarily referring to the same embodiment or example. Moreover, the particular feature, structure, material or feature described may be combined in any one or more embodiments or examples in a suitable manner. Furthermore, without contradicting each other, the skilled in the art may combine different embodiments or examples described in this specification and features of different embodiments or examples.

Although embodiments of the disclosure have been shown and described above, it should be understood that the above embodiments are exemplary and should not be construed as limiting the disclosure. The skilled in the art can make changes, modifications, substitutions and variations to the above embodiments within the scope of the disclosure.

## Claims

1. A method for scheduling a branch predictor for multiple instructions, comprising:
determining a group of branch predictors to be scheduled, wherein the group of branch predictors comprises N branch predictors, where N is an integer greater than or equal to 1;
obtaining an instruction set to be processed, wherein the instruction set comprises M instructions arranged in an order, where M is an integer greater than or equal to 1;
obtaining an initial fetch address and an instruction type of each instruction in the instruction set;
determining a using order of the N branch predictors based on the initial fetch address and the instruction type of each instruction in the instruction set;
determining a correspondence between the M instructions and the N branch predictors based on the using order and the order of instructions in the instruction set; and
scheduling a corresponding branch predictor for the instruction in the instruction set to process the instruction in the instruction set based on the order of instructions in the instruction set and the correspondence.

2. The method of claim 1, wherein determining the using order of the N branch predictors based on the initial fetch address and the instruction types of the instructions in the instruction set comprises:
determining a branch predictor to be used by a first instruction in the instruction set from the N branch predictors based on the initial fetch address, and determining the branch predictor to be used by the first instruction as a start branch predictor;
for an i-th instruction remained in the instruction set, determining an address interval corresponding to the i-th instruction based on an instruction type of the i-th instruction, where i is an integer greater than 1; and
determining a using order of remaining branch predictors in the N branch predictors based on the start branch predictor and the address interval corresponding to the i-th instruction.

3. The method of claim 2, wherein determining the using order of the remaining branch predictors in the N branch predictors based on the start branch predictor and the address interval corresponding to the i-th instruction comprises:
obtaining a branch predictor to be used by an (i-1)-th instruction;
determining a predictor serial number of the branch predictor to be used by the (i-1)-th instruction; and
obtaining a branch predictor to be used by the i-th instruction by adding the predictor serial number of the branch predictor to be used by the (i-1)-th instruction to the address interval corresponding to the i-th instruction.

4. The method of claim 3, further comprising:
in response to i being 2 and the i-th instruction being a second instruction, obtaining a branch predictor to be used by the second instruction by adding the predictor serial number of the start branch predictor to an address interval corresponding to the second instruction.

5. The method of claim 2, wherein determining the address interval corresponding to the i-th instruction based on the instruction type of the i-th instruction comprises:
in response to the instruction type of the i-th instruction being a compressed instruction, determining the address interval corresponding to the i-th instruction as a first value; or
in response to the instruction type of the i-th instruction being a non-compressed instruction, determining the address interval corresponding to the i-th instruction as a second value, wherein the first value is different from the second value.

6. The method of any one of claims 2 to 5, wherein determining the branch predictor to be used by the first instruction in the instruction set from the N branch predictors based on the initial fetch address comprises:
determining a target address array to be combined based on a high-order address of the initial fetch address;
obtaining a start using serial number by performing an exclusive OR (XOR) processing, an addition processing or a hash processing on the target address array and an offset address of the initial fetch address; and
determining a branch predictor in the N branch predictors of which a predictor serial number is consistent with the start using serial number as the branch predictor to be used by the first instruction.

7. The method of claim 6, wherein determining the target address array to be combined based on the high-order address of the initial fetch address comprises:
determining a number of bits of the offset address; and
obtaining the target address array by continuously truncating the high-order address based on the number of bits of the offset address; or
obtaining the target address array by folding the high-order address until a number of bits of the folded high-order address is equal to the number of bits of the offset address.

8. The method of claim 7, wherein obtaining the target address array by folding the high-order address until the number of bits of the folded high-order address is equal to the number of bits of the offset address comprises:
selecting a plurality of candidate address arrays with the same number of bits as the offset address from the high-order address; and
obtaining the target address array by performing the XOR processing, the addition processing or the hash processing on two or more candidate address arrays in the plurality of candidate address arrays.

9. The method of claim 5, further comprising:
obtaining an address of each instruction in the instruction set and extracting a common portion of the address of each instruction as a high-order address; and
obtaining a high-order address and a low-order address remained in an address of the first instruction in the instruction set, and determining an offset address from the low-order address.

10. An apparatus for scheduling a branch predictor for multiple instructions, comprising:
a first determining module, configured to determine a group of branch predictors to be scheduled, wherein the group of branch predictors comprises N branch predictors, where N is an integer greater than or equal to 1;
a first obtaining module, configured to obtain an instruction set to be processed, wherein the instruction set comprises M instructions arranged in an order, where M is an integer greater than or equal to 1;
a second obtaining module, configured to obtain an initial fetch address and an instruction type of each instruction in the instruction set;
a second determining module, configured to determine a using order of the N branch predictors based on the initial fetch address and the instruction type of each instruction in the instruction set;
a third determining module, configured to determine a correspondence between the M instructions and the N branch predictors based on the using order and the order of instructions in the instruction set; and
a processing module, configured to schedule a corresponding branch predictor for the instruction in the instruction set to process the instruction in the instruction set based on the order of instructions in the instruction set and the correspondence.

11. The apparatus of claim 10, wherein the second determining module is further configured to:
determine a branch predictor to be used by a first instruction in the instruction set from the N branch predictors based on the initial fetch address, and determining the branch predictor to be used by the first instruction as a start branch predictor;
for an i-th instruction remained in the instruction set, determine an address interval corresponding to the i-th instruction based on an instruction type of the i-th instruction, where i is an integer greater than 1; and
determine a using order of remaining branch predictors in the N branch predictors based on the start branch predictor and the address interval corresponding to the i-th instruction.

12. The apparatus of claim 11, wherein the second determining module is further configured to:
obtain a branch predictor to be used by an (i-1)-th instruction;
determine a predictor serial number of the branch predictor to be used by the (i-1)-th instruction; and
obtain a branch predictor to be used by the i-th instruction by adding the predictor serial number of the branch predictor to be used by the (i-1)-th instruction to the address interval corresponding to the i-th instruction.

13. The apparatus of claim 12, wherein the second determining module is further configured to:
in response to i being 2 and the i-th instruction being a second instruction, obtain a branch predictor to be used by the second instruction by adding the predictor serial number of the start branch predictor to an address interval corresponding to the second instruction.

14. The apparatus of claim 11, wherein the second determining module is further configured to:
in response to the instruction type of the i-th instruction being a compressed instruction, determine the address interval corresponding to the i-th instruction as a first value; or
in response to the instruction type of the i-th instruction being a non-compressed instruction, determine the address interval corresponding to the i-th instruction as a second value, wherein the first value is different from the second value.

15. The apparatus of any one of claims 11 to 14, wherein the second determining module is further configured to:
determine a target address array to be combined based on a high-order address of the initial fetch address;
obtain a start using serial number by performing an exclusive OR (XOR) processing, an addition processing or a hash processing on the target address array and an offset address of the initial fetch address; and
determine a branch predictor in the N branch predictors of which a predictor serial number is consistent with the start using serial number as the branch predictor to be used by the first instruction.

16. The apparatus of claim 15, wherein the second determining module is further configured to:
determine a number of bits of the offset address; and
obtain the target address array by continuously truncating the high-order address based on the number of bits of the offset address; or
obtain the target address array by folding the high-order address until a number of bits of the folded high-order address is equal to the number of bits of the offset address.

17. The apparatus of claim 16, wherein the second determining module is further configured to:
select a plurality of candidate address arrays with the same number of bits as the offset address from the high-order address; and
obtain the target address array by performing the XOR processing, the addition processing or the hash processing on two or more candidate address arrays in the plurality of candidate address arrays.

18. The apparatus of claim 14, wherein the second determining module is further configured to:
obtain an address of each instruction in the instruction set and extracting a common portion of the address of each instruction as a high-order address; and
obtain a high-order address and a low-order address remained in an address of the first instruction in the instruction set, and determining an offset address from the low-order address.

19. An electronic device, comprising: a processor and a memory;
wherein the processor is configured to read executable program codes stored in the memory to run a program corresponding to the executable program codes, to realize the method of any one of claims 1 to 9.

20. A computer-readable storage medium having stored a computer program, wherein the method of any one of claims 1 to 9 is realized when the computer program is executed by a processor.
